# FASCICULE DE BREVET EUROPEEN

(11) **EP 2 307 780 B1**
(45) Date de publication et mention de la délivrance du brevet: **31.10.2012**
(21) Numéro de dépôt: 09802556.2
(22) Date de dépôt: 27.07.2009
(51) Int. Cl.: C21D 9/08, C21D 9/46, C21D 9/52, C22C 38/00, C22C 38/42, C22C 38/44, F16L 58/08, F16L 58/16, F16L 11/08

(54) **CONDUITE FLEXIBLE POUR LE TRANSPORT D'HYDROCARBURES À HAUTE RÉSISTANCE À LA CORROSION ET SON PROCÉDÉ DE FABRICATION**
FLEXIBLE LEITUNG ZUR FÖRDERUNG VON KOHLENWASSERSTOFF MIT HOHER KORROSIONSFESTIGKEIT SOWIE VERFAHREN ZU IHRER HERSTELLUNG
FLEXIBLE DUCT FOR CONVEYING HYDROCARBONS HAVING A HIGH CORROSION RESISTANCE, AND METHOD FOR MAKING SAME

(30) Priorité: 28.07.2008 FR 0804292
(43) Date de publication de la demande: 13.04.2011
(73) Titulaire: Technip France, 92400 Courbevoix (FR)
(72) Inventeur: MARCHAND, Didier, F-76800 Saint Etienne du Rouvray (FR)
(74) Mandataire: Bertrand, Didier
(86) Numéro de dépôt international: PCT/FR2009/000930
(87) Numéro de publication internationale: WO 2010/012896

(56) Documents cités:
- WO-A-01/44531
- WO-A-02/27056
- WO-A-2006/097112
- FR-A- 2 119 612

## Description

La présente invention concerne une conduite tubulaire flexible pour le transport de fluides utilisée dans le domaine de l'exploitation pétrolière en mer. Elle concerne plus particulièrement une conduite flexible comportant une carcasse interne à haute résistance à la corrosion, et son procédé de fabrication.

Les conduites flexibles visées par la présente invention sont formées d'un ensemble de différentes couches concentriques et superposées, et sont dites de type non lié (« unbonded » en anglais) car ces couches présentent une certaine liberté de se déplacer les unes par rapport aux autres. Ces conduites flexibles satisfont entre autres aux recommandations des documents normatifs API 17J « Specification for Unbonded Flexible Pipe » et API RP 17B « Recommended Practice for Flexible Pipe » publiés par l' « American Petroleum Institute ». Les couches constitutives comprennent notamment des gaines polymériques assurant généralement une fonction d'étanchéité, et des couches de renfort destinées à la reprise des efforts mécaniques et formées par des enroulements de feuillard, de fils métalliques, de bandes diverses ou de profilés en matériaux composites.

Les conduites flexibles de type non lié les plus utilisées dans l'industrie pétrolière offshore comprennent généralement, de l'intérieur vers l'extérieur, une carcasse interne constituée d'un feuillard en acier inoxydable profilé et enroulé hélicoïdalement à pas court en spires agrafées les unes aux autres, ladite carcasse interne servant principalement à empêcher l'écrasement de la conduite sous l'effet de la pression externe, une gaine d'étanchéité interne en polymère, une voûte de pression constituée d'au moins un fil métallique de forme agrafé et enroulé hélicoïdalement à pas court, ladite voûte de pression servant à reprendre les efforts radiaux liés à la pression interne, des nappes d'armures de traction formées d'enroulements hélicoïdaux à pas long de fils métalliques ou composites, lesdites nappes d'armures étant destinés à reprendre les efforts longitudinaux que subit la conduite, et enfin une gaine externe d'étanchéité destinée à protéger de l'eau de mer les couches de renfort. Dans la présente demande, on entend par enroulement à pas court tout enroulement ayant un angle d'hélice dont la valeur absolue est proche de 90°, en pratique compris entre 70° et 90°. Le terme enroulement à pas long désigne quant à lui tout enroulement dont l'angle d'hélice est inférieur ou égal, en valeur absolue, à 55°.

Une conduite flexible comportant une carcasse interne est dite à passage non lisse (« rough bore » en anglais) car l'élément le plus intérieur est la carcasse interne qui forme un passage non lisse en raison des déjoints entre les spires métalliques du feuillard agrafé.

La carcasse interne est en contact direct le fluide circulant dans la conduite. Or les hydrocarbures extraits de certains champs pétroliers peuvent être extrêmement corrosifs. C'est le cas en particulier des hydrocarbures polyphasiques comportant de fortes pressions partielles en hydrogène sulfuré (H2S), typiquement au moins 2 bar, et/ou en dioxyde de carbone (CO2), typiquement au moins 5 bar, et présentant en outre une forte concentration en chlorures, typiquement au moins 50000ppm. De tels fluides sont généralement très acides (pH < 4,5). En outre, leur température peut excéder 90°C. Dans ces conditions très sévères, la carcasse interne doit pouvoir conserver son intégrité pendant une durée de service d'au moins 20 ans.

De plus, la conduite flexible doit avoir une résistance à l'écrasement (« collapse » en anglais) suffisante pour lui permettre de résister à de fortes pressions externes, notamment la pression hydrostatique lorsque la conduite est immergée à grande profondeur (1000m voire 2000m ou plus), ou encore les pressions externes de contact subies pendant les opérations de manutention et d'installation en mer. De plus, il est souhaitable de limiter le poids de la conduite flexible, et donc en particulier celui de la carcasse interne, notamment pour les applications à grande profondeur. Cette réduction de poids permet entre autres de faciliter l'installation en mer, d'atteindre des profondeurs d'eau plus importantes et de réduire les coûts de fabrication et d'installation. Or, la résistance à l'écrasement de la carcasse interne est une fonction croissante de la limite élastique du feuillard profilé dont elle constituée. C'est pourquoi il est avantageux de chercher à augmenter la limite élastique de ce feuillard, en veillant toutefois à ce que la tenue à la corrosion reste satisfaisante.

La demande WO 00/00650 et le document normatif API RP 17B divulguent des conduites flexibles dont la carcasse interne est réalisée, en acier inoxydable austénitique, notamment les nuances AISI 304 (UNS S30400), AISI 304L (UNS S30403), AISI 316 (UNS S31600) et AISI 316L (UNS S31603). Ils divulguent aussi des solutions dans lesquelles la carcasse interne est réalisée en acier duplex, notamment la nuance 2205 (UNS S31803), ou bien en alliage base nickel, notamment l'alliage 825 (UNS N08825).

En outre, la demande WO 2006/097112 fait connaître des conduites flexibles dont la carcasse interne est réalisée en acier duplex appauvri en nickel (« lean duplex ») notamment la nuance 2101 (UNS S32101).

Cependant, ces solutions de l'art antérieur ne sont pas satisfaisantes. En effet, les carcasses internes en acier austénitique ou en duplex ne résistent pas suffisamment aux milieux très corrosifs décrits plus haut. Celles en alliage base nickel souffrent quant à elles de caractéristiques mécaniques trop basses et sont de surcroît très coûteuses.

Un problème qui se pose et vise à résoudre la présente invention est donc de mettre au point une conduite flexible comportant une carcasse interne pouvant résister à des milieux fortement corrosifs, ayant en outre une forte résistance à l'écrasement, et pouvant enfin être fabriquée et installée à un coût avantageux.

Dans ce but, et selon un premier aspect, la présente invention propose une conduite tubulaire flexible pour le transport de fluides dans le domaine de l'exploitation pétrolière offshore, ladite conduite tubulaire flexible comportant au moins une carcasse interne et une gaine polymérique d'étanchéité, ladite carcasse interne comportant un profil métallique de renfort enroulé en hélice ; en outre, ladite conduite est caractérisée en ce que ledit profil métallique de renfort est réalisé en un alliage résistant à la corrosion de composition
30 à 32% en masse de nickel (Ni),
26 à 28% en masse de chrome (Cr),
6 à 7 % en masse de molybdène (Mo),
0,10 à 0,3% en masse d'azote (N),
au plus 0,015% en masse de carbone (C),
au plus 2% en masse de manganèse (Mn),
0,5 à 1,5% en masse de cuivre (Cu),
au plus 0,5% en masse d'impuretés,
le reste de la composition étant constitué de fer (Fe).

En outre, avantageusement, ledit alliage résistant à la corrosion est le UNS N08031.

Selon un premier mode de réalisation de l'invention, ledit profil métallique de renfort est un fil de forme tréfilé ou laminé. Selon un autre mode de réalisation de l'invention, ledit profil métallique de renfort est un feuillard profilé. Par ailleurs, ledit profil métallique de renfort est préférentiellement agrafé.

De plus, avantageusement, la limite élastique dudit profil métallique de renfort est supérieure à 800 MPa. En outre, ledit profil métallique de renfort comporte préférentiellement des zones présentant une dureté supérieure à 40 HRc.

Dans la présente demande, faute d'indication contraire, les limites élastiques sont mesurées à un seuil d'allongement de 1 % (Rp 1).

Selon un second aspect, l'invention propose un procédé de fabrication d'une conduite tubulaire flexible pour le transport de fluides dans le domaine de l'exploitation pétrolière offshore, ladite conduite tubulaire flexible comportant au moins une carcasse interne et une gaine polymérique d'étanchéité, ledit procédé de fabrication étant du type selon lequel on fournit un profil métallique brut de grande longueur ; on enroule hélicoïdalement ledit profil métallique brut pour former un profil métallique de renfort, ledit profil métallique de renfort étant un composant de la carcasse interne; on extrude une gaine polymérique d'étanchéité (3) autour de ladite carcasse interne; en outre, ledit procédé de fabrication est caractérisé en ce que ledit profil métallique brut est réalisé en un alliage résistant à la corrosion de composition
30 à 32% en masse de nickel (Ni),
26 à 28% en masse de chrome (Cr),
6 à 7 % en masse de molybdène (Mo),
0,10 à 0,3% en masse d'azote (N),
au plus 0,015% en masse de carbone (C),
au plus 2% en masse de manganèse (Mn),
0,5 à 1,5% en masse de cuivre (Cu),
au plus 0,5% en masse d'impuretés,
le reste de la composition étant constitué de fer (Fe).

De plus, avantageusement, ledit alliage résistant à la corrosion est le UNS N08031.

Selon un premier mode de réalisation de l'invention, ledit profil métallique brut est un fil de forme tréfilé ou laminé. Selon un autre mode de réalisation, ledit profil métallique brut est un feuillard. Dans ce cas, avantageusement, ledit profil métallique brut est transformé par profilage avant d'être enroulé hélicoïdalement. Par ailleurs, ledit profil métallique brut est préférentiellement agrafé pendant l'étape d'enroulement hélicoïdal.

En outre, avantageusement, l'écrouissage appliqué audit profil métallique brut pour le transformer en ledit profil métallique de renfort est appliqué à température ambiante, ce qui a pour effet d'élever la limite élastique du matériau. Par ailleurs, la limite élastique dudit profil métallique de renfort est préférentiellement supérieure à 800 MPa. De plus, avantageusement la limite élastique dudit profil métallique brut est avant écrouissage comprise entre 300 MPa et à 400 MPa.

Ainsi, il a été découvert que, de façon surprenante, les alliages ayant la composition définie plus haut résistent remarquablement bien dans les milieux fortement corrosifs précités, tout en présentant une limite élastique élevée. De plus, cette invention va à l'encontre des recommandations des normes API RP 17B et NACE MR 0175 / ISO 15156, lesquelles recommandent en pareille situation de choisir un alliage base nickel comportant typiquement au moins 40% en masse de nickel. Ce point sera détaillé plus loin. Or contre toute attente, il s'avère que des alliages selon la présente invention qui ne comportent que 30% à 32% en masse de nickel peuvent eux aussi résister durablement en milieu très corrosif, tout en ayant une limite élastique élevée, en pratique supérieure à 800 MPa.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
- la Figure 1 est une vue schématique partielle en perspective d'une conduite tubulaire flexible conforme à l'invention ; et,
- la Figure 2 est une vue schématique partielle en coupe axiale de la conduite illustrée sur la Figure 1.

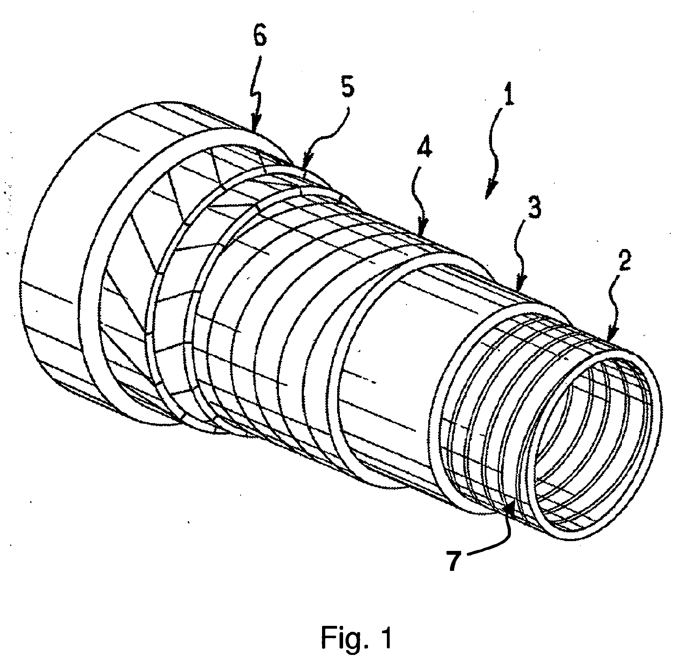

La Figure 1 illustre une conduite tubulaire flexible 1 destinée à l'exploitation pétrolière offshore, et plus particulièrement au transport de pétrole ou de gaz. Elle est du type non lié (« unbonded » en anglais) et répond aux spécifications définies dans le document normatif API 17J. Cette conduite tubulaire flexible 1 comporte, de l'intérieur vers l'extérieur, une carcasse interne 2, une gaine polymérique d'étanchéité 3, une voûte de pression 4, des armures de traction 5 et une gaine polymérique externe 6. La gaine polymérique d'étanchéité 3 a pour fonction de confiner le fluide circulant à l'intérieur de la conduite. Afin de pouvoir résister à la pression interne, la gaine polymérique d'étanchéité 3 est soutenue par la voûte de pression 4 formée d'un enroulement à pas court d'un fil de forme métallique agrafé et destiné à reprendre les efforts radiaux liés à la pression interne. Autour de la voûte de pression 4, deux nappes croisées d'armures de traction 5 sont enroulées à pas long et sont destinées à reprendre les efforts longitudinaux de traction auxquels est soumise la conduite. La conduite flexible 1 comporte aussi une gaine polymérique externe 6 entourant et protégeant les couches de renfort 4,5 précitées.

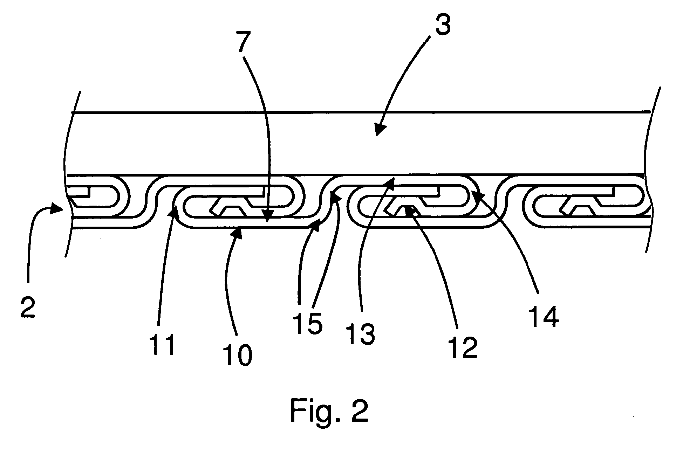

L'objet de l'invention porte sur la carcasse interne 2, couche dont la fonction principale est la reprise les efforts radiaux tendant à écraser la conduite. La carcasse interne 2 comporte un profil métallique de renfort 7 enroulé à pas court et dont les spires adjacentes sont généralement agrafées. Selon le mode principal de réalisation, la carcasse interne 2 est constituée d'un simple feuillard profilé en forme de S, agrafé de spire en spire, tel que décrit dans le document FR2654795 et qu'illustré à la Figure 2. Dans ce cas, le profil métallique de renfort 7 est précisément ce feuillard profilé en forme de S. Selon un deuxième mode de réalisation notamment décrit dans le document FR2772293, le feuillard profilé en forme de S peut être remplacé par un fil de forme tréfilé et/ou laminé, agrafé de spire en spire, et présentant une géométrie en forme de Z, de T, de U, de X ou de K. Dans ce deuxième cas, le profil métallique de renfort 7 est précisément ce fil de forme tréfilé et/ou laminé. Selon un troisième mode de réalisation notamment décrit dans le document WO03/036152, la carcasse interne 2 comporte à la fois un feuillard profilé et un fil tréfilé et/ou laminé, ces deux composants étant enroulés et agrafés ensemble. Dans ce cas, ce feuillard profilé et ce fil tréfilé et/ ou laminé peuvent tous les deux être considérés comme étant des profils métalliques de renfort de la carcasse interne.

Selon la présente invention, le profil métallique de renfort 7 est réalisé en un alliage résistant à la corrosion de composition décrite plus haut , et préférentiellement en alliage UNS N08031. Ce type de matériau est notamment commercialisé par la société ThyssenKrupp VDM sous la marque Nicrofer® 3127 hMo.

Cet alliage a typiquement la composition suivante :
30 à 32% en masse de nickel (Ni),
26 à 28% en masse de chrome (Cr),
6 à 7 % en masse de molybdène (Mo),
0,15 à 0,25% en masse d'azote (N),
au plus 0,015% en masse de carbone (C),
au plus 2% en masse de manganèse (Mn),
1 à 1,4% en masse de cuivre (Cu),
au plus 0,3% en masse de silicium (Si)
au plus 0,02% en masse de phosphore (P)
au plus 0,01 % en masse de souffre (S)
le reste étant du fer (Fe) à hauteur de 100%

Cet alliage se situe à la frontière entre d'une part les aciers inoxydables super austénitiques, et plus précisément les super austénitiques chargés à 6% de molybdène, et d'autre part les alliages à base nickel. Il fait donc partie de la liste des alliages résistants à la corrosion (CRA / Corrosion Resistant Alloy en anglais) envisageables pour les applications en milieu sévère. Cependant la sélection de cet alliage particulier par l'homme du métier s'est heurtée à plusieurs difficultés, a nécessité de nombreux essais, et va à l'encontre de préjugés issus des normes et documents normatifs.

La première difficulté pour effectuer cette sélection est liée au grand nombre de nuances envisageables. Ainsi, dans la famille des duplex, l'homme du métier ayant à résoudre le problème précité aurait envisagé, outre le duplex 2205 (UNS S31803), les super duplex à 25% de chrome du type SAF 2507 (UNS S32750) voire même les hyper duplex à 29% de chrome, ces matériaux étant réputés combiner une grande résistance à la corrosion et des caractéristiques mécaniques très élevées. A ceci, il faut ajouter tous les aciers inoxydables super austénitiques, lesquels sont eux aussi réputés pour leur résistance à la corrosion. Parmi ceux-ci on peut notamment citer le 904L (USN N08904), le 254SMo (UNS S31254), le 654SMo (UNS S32654) et le 4565 (UNS S34565) commercialisés tous les quatre par la société Outokumpu, le 25-6Mo (UNS N08925), le AL6XN® (UNS N08367) commercialisé par la société Allegheny et le Cronifer®1925hMo (UNS N08926) commercialisé par la société ThyssenKrupp VDM. Ces alliages super austénitiques ont une teneur en nickel comprise entre 17% et 28% et une teneur en chrome comprise entre 19% et 25%. Enfin, l'homme du métier aurait aussi envisagé les alliages base nickel, lesquels sont connus comme étant les matériaux les plus performants en milieux très corrosifs et tout particulièrement l'inconel® 625 (UNS N06625), l'Hastelloy C22® (UNS N06022) commercialisé par la société Haynes International, l'Incoloy® 825 (UNS N08825), le C-276 (UNS N010276), et le Nicrofer®5923hMo (UNS N06059) commercialisé par la société ThyssenKrupp VDM. Ces alliages base nickel comportent une teneur en nickel supérieure à 40%, ce qui les rend extrêmement coûteux.

La deuxième difficulté est liée au fait que la norme de référence utilisée par l'homme du métier, à savoir la norme NACE MR0175 / ISO 15156 à laquelle renvoie la norme API RP 17B au paragraphe « Materials - Unbonded Pipe - Carcass », ne cite pas la nuance UNS N08031, alors que ce même document liste plus d'une centaine de nuances d'aciers inxoydables, de duplex, de super auténitiques et de d'alliages base nickel (Partie 3 - Annexe D - Tables D1 à D7).

La troisième difficulté est que la stricte application de cette norme aurait conduit l'homme du métier à choisir des alliages base nickel, et par conséquent à éliminer les duplex et les super austénitiques. En effet, les étapes de profilage et de spiralage permettant de transformer un feuillard brut en carcasse interne sont effectuées à température ambiante. Par conséquent, le feuillard subit alors un écrouissage à froid qui a pour effet bénéfique d'augmenter sa limite élastique, mais pour inconvénient de réduire sa tenue à la corrosion dans un milieu présentant une forte concentration en H2S. En effet, les zones du matériau ayant été excessivement écrouies à froid, et pas là même fortement durcies, comportent de nombreuses dislocations dans lesquelles d'hydrogène va se piéger et provoquer des fissurations. C'est pourquoi, dans le cas milieux présentant une forte pression partielle en H2S, la norme NACE précitée recommande une dureté maximum à ne pas dépasser. Elle préconise aussi d'effectuer si nécessaire un traitement de recuit après écrouissage à froid afin de revenir en deçà des seuils de dureté recommandés. Or, il s'avère que les seuils de dureté sont respectivement de 35 HRc pour les super austénitiques et de 40 HRc pour les alliages base nickel. De plus, de nombreux essais ont montré que qu'elle que soit la nuance utilisée, un feuillard profilé présentant après écrouissage à froid une limite élastique moyenne supérieure à 800 MPa présente aussi nécessairement des zones fortement écrouies de dureté de l'ordre de 40 HRc. Par conséquent, la solution consistant à recuire la carcasse interne ayant été éliminée pour des raisons de coût et de complexité de fabrication, l'homme du métier se serait donc naturellement orienté vers les alliages base nickel qui sont les seuls à pouvoir respecter les recommandations de cette norme.

La Figure 2 illustre ce phénomène d'hétérogénéité de dureté et d'écrouissage. Elle représente en coupe axiale partielle une carcasse interne 2 revêtue sur sa face extérieure d'une gaine polymérique d'étanchéité 3. Cette carcasse comporte un profil métallique de renfort 7 qui est dans le cas présent un feuillard profilé en forme de S. On entend par feuillard un profilé mince et plat de grande longueur, présentant typiquement une largeur au moins 15 fois supérieure à son épaisseur. Le feuillard brut est transformé en feuillard profilé en S par une machine appelé profileuse qui utilise plusieurs paires de galets de forme pour donner progressivement et continûment au feuillard la géométrie souhaitée. La profileuse est généralement embarquée directement sur une machine tournante appelé spiraleuse, de telle sorte que le feuillard profilé soit directement enroulé et agrafé pour former la carcasse interne. Le feuillard brut en alliage UNS N08031 présente avant profilage une limite élastique de l'ordre de 330MPa et une dureté inférieure à 20 HRc. Une fois mise en forme, le feuillard profilé et agrafé, vu en coupe longitudinale, présente des parties planes, notamment les parties 10, 13 qui ont été faiblement écrouies, si bien que leur dureté reste inférieure à 30HRc. Par contre, le feuillard a subi de fortes déformations dans les zones de pliage du S, à savoir les 2 flancs latéraux 11, 14 et la partie centrale 15, ainsi que dans la zone du crochet d'appui 12. Dans ces zones fortement écrouies, la dureté locale est de l'ordre de 38 à 40 HRc, avec quelques points à 41 HRc. La limite élastique moyenne du feuillard profilé, mesurée parallèlement à l'axe de dernier est de l'ordre de 840 MPa. Bien que l'alliage UNS N08031 ne soit pas cité dans la norme NACE précitée, les documents publics relatifs à la tenue à la corrosion de ce matériau spécifient que son seuil de dureté est 35 HRc, c'est-à-dire le même que celui des super austénitiques. Ceci est d'ailleurs cohérent avec le fait que certains auteurs considèrent que le UNS N08031 appartient à la catégorie des super austénitiques chargés à 6% de molybdène.

Or, contre toute attente, des essais ont montré que le UNS N08031 résiste à des milieux fortement corrosifs aussi bien que certains alliages base nickel nettement plus coûteux. Les tests ont consisté à immerger pendant 30 jours des échantillons de feuillard profilé nettoyés et dégraissés dans divers milieux corrosifs, puis à les examiner pour rechercher les traces de corrosion généralisée (diminution de poids) ou locale (piqûres, fissures, marques) . Des tests ont été effectués en milieu désaéré dans les conditions suivantes :

### Exemple 1 :

Température : 120 °C
Pression partielle H2S : 0,9 bar
Pression partielle CO2 : 10,3 bar
Taux de chlorures : 55000 ppm
pH : 4,3

### Exemple 2 :

Température : 94°C
Pression partielle H2S : 2,4 bar
Pression partielle CO2 : 5,2 bar
Taux de chlorures : 112000 ppm
pH : 4,4

Les tests ont montré que les feuillards profilés en duplex 2205 et en super duplex SAF 25.07 échouent à ces tests. Il a été observé des piqûres et des fissures SSC (« sulphide stress cracking » en anglais) dans les zones fortement écrouies.

Comme prévu par les documents normatifs, l'alliage base nickel Nicrofer®5923hMo (UNS N06059) a parfaitement réussi ces tests. Cependant, cet alliage qui contient de l'ordre de 59% en nickel est extrêmement coûteux. De plus, sa limite élastique après profilage est de seulement 700 MPa, à comparer avec les 840MPa obtenus avec le UNS N08031.

De façon surprenante, le feuillard profilé en alliage UNS N08031 a lui aussi parfaitement résisté à ces tests.

De plus, un autre effet surprenant qui a été mis en évidence est que l'augmentation de limite élastique lors du profilage est supérieure pour l'alliage UNS N08031 que pour les nuances voisines. A écrouissage égal, la limite élastique du feuillard en UNS N08031 est multipliée par un coefficient supérieur à 2,5 alors que dans des conditions similaires de transformation, ce coefficient multiplicatif est seulement de l'ordre de 1,5 pour les aciers duplex, de 1,8 pour l'inox austénitique 316L et de 1,8 pour l'alliage base nickel UNS N06059. Ainsi, par exemple, bien que le feuillard UNS N06059 ait à l'état brut une limite élastique sensiblement supérieure à celle du feuillard brut UNS N08031 (380 MPa contre 330 MPa), il présente un fois profilé une limite élastique nettement inférieure à celle du feuillard profilé UNS N08031 (700 MPa contre 840 MPa). Il semble que cet effet technique particulièrement favorable à l'alliage UNS N08031 soit lié à la présence d'azote.

On peut enfin noter que ces essais ont aussi confirmé la possibilité de fabriquer la carcasse interne 2 avec d'autres aciers inoxydables super austénitiques présentant une teneur en nickel inférieure à celle du UNS N08031, notamment le UNS N08367 et le UNS N08926 qui comportent tous les deux de l'ordre de 25% de nickel, de 6% de molybdène et de 0,2% d'azote. Cependant, les performances de tenue à la corrosion de ces matériaux sont inférieures.

## Revendications

1. Conduite tubulaire flexible (1) pour le transport de fluides dans le domaine de l'exploitation pétrolière offshore, ladite conduite tubulaire flexible (1) comportant au moins une carcasse interne (2) et une gaine polymérique d'étanchéité (3), ladite carcasse interne (2) comportant un profil métallique de renfort (7) enroulé en hélice, **caractérisée en ce que** ledit profil métallique de renfort (7) est réalisé en un alliage résistant à la corrosion de composition
30 à 32% en masse de nickel (Ni),
26 à 28% en masse de chrome (Cr),
6 à 7 % en masse de molybdène (Mo),
0,10 à 0,3% en masse d'azote (N),
au plus 0,015% en masse de carbone (C),
au plus 2% en masse de manganèse (Mn),
0,5 à 1,5% en masse de cuivre (Cu),
au plus 0,5% en masse d'impuretés,
le reste de la composition étant constitué de fer (Fe).

2. Conduite tubulaire flexible (1) selon la revendication 1, **caractérisée en ce que** ledit alliage résistant à la corrosion est le UNS N08031.

3. Conduite tubulaire flexible (1) selon la revendication 1 ou 2, **caractérisée en ce que** ledit profil métallique de renfort (7) est un fil de forme tréfilé ou laminé.

4. Conduite tubulaire flexible (1) selon la revendication 1 ou 2, **caractérisée en ce que** ledit profil métallique de renfort (7) est un feuillard profilé.

5. Conduite tubulaire flexible (1) selon l'une quelconque des revendications 1 à 4, **caractérisée en ce que** ledit profil métallique de renfort (7) est agrafé.

6. Conduite tubulaire flexible (1) selon l'une quelconque des revendications 1 à 5, **caractérisée en ce que** la limite élastique dudit profil métallique de renfort (7) est supérieure à 800 MPa.

7. Conduite tubulaire flexible (1) selon l'une quelconque des revendications 1 à 6, **caractérisée en ce que** ledit profil métallique de renfort (7) comporte des zones présentant une dureté supérieure à 40 HRc.

8. Procédé de fabrication d'une conduite tubulaire flexible (1) pour le transport de fluides dans le domaine de l'exploitation pétrolière offshore, ladite conduite tubulaire flexible (1) comportant au moins une carcasse interne (2) et une gaine polymérique d'étanchéité (3), ledit procédé de fabrication comportant au moins les étapes suivantes:
- on fournit un profil métallique brut de grande longueur;
- on enroule hélicoïdalement ledit profil métallique brut pour former un profil métallique de renfort (7), ledit profil métallique de renfort (7) étant un composant de la carcasse interne (2) ;
- on extrude une gaine polymérique d'étanchéité (3) autour de ladite carcasse interne (2) ;
ledit procédé de fabrication étant **caractérisé en ce que** ledit profil métallique brut est réalisé en un alliage résistant à la corrosion de composition
30 à 32% en masse de nickel (Ni),
26 à 28% en masse de chrome (Cr),
6 à 7 % en masse de molybdène (Mo),
0,10 à 0,3% en masse d'azote (N),
au plus 0,015% en masse de carbone (C),
au plus 2% en masse de manganèse (Mn),
0,5 à 1,5% en masse de cuivre (Cu),
au plus 0,5% en masse d'impuretés,
le reste de la composition étant constitué de fer (Fe).

9. Procédé de fabrication selon la revendication 8, **caractérisé en ce que** ledit alliage résistant à la corrosion est le UNS N08031.

10. Procédé de fabrication selon la revendication 8 ou 9, **caractérisé en ce que** ledit profil métallique brut est un fil de forme tréfilé ou laminé.

11. Procédé de fabrication selon la revendication 8 ou 9, **caractérisé en ce que** ledit profil métallique brut est un feuillard.

12. Procédé de fabrication selon la revendication 11, **caractérisé en ce que** ledit profil métallique brut est transformé par profilage avant d'être enroulé hélicoïdalement.

13. Procédé de fabrication selon l'une quelconque des revendications 8, 9, 10 et 12, **caractérisé en ce que** ledit profil métallique brut est agrafé pendant l'étape d'enroulement hélicoïdal.

14. Procédé de fabrication selon l'une quelconque des revendications 8 à 13, **caractérisé en ce que** l'écrouissage appliqué audit profil métallique brut pour le transformer en ledit profil métallique de renfort (7) est appliqué à température ambiante.

15. Procédé de fabrication selon la revendication 14, **caractérisé en ce que** la limite élastique dudit profil métallique de renfort (7) est supérieure à 800 MPa.

16. Procédé de fabrication selon la revendication 15, **caractérisé en ce que** la limite élastique dudit profil métallique brut est comprise entre 300 MPa et à 400 MPa.

## Claims

1. A flexible tubular pipe (1) for transporting fluids in the offshore oil production field, said flexible tubular pipe (1) comprising at least one internal carcass (2) and a polymeric sealing sheath (3), said internal carcass (2) comprising a helically-wound reinforcing metal profile (7), **characterized in that** said reinforcing metal profile (7) is made from a corrosion-resistant alloy of composition:
30 to 32% by weight of nickel (Ni),
26 to 28% by weight of chromium (Cr),
6 to 7% by weight of molybdenum (Mo),
0.10 to 0.3% by weight of nitrogen (N),
at most 0.015% by weight of carbon (C),
at most 2% by weight of manganese (Mn),
0.5 to 1.5% by weight of copper (Cu),
at most 0.5% by weight of impurities,
the remainder of the composition being constituted of iron (Fe).

2. The flexible tubular pipe (1) as claimed in claim 1, **characterized in that** said corrosion-resistant alloy is UNS N08031.

3. The flexible tubular pipe (1) as claimed in claim 1 or 2, **characterized in that** said reinforcing metal profile (7) is a wire of drawn or rolled form.

4. The flexible tubular pipe (1) as claimed in claim 1 or 2, **characterized in that** said reinforcing metal profile (7) is a profiled strip.

5. The flexible tubular pipe (1) as claimed in any one of claims 1 to 4, **characterized in that** said reinforcing metal profile (7) is interlocked.

6. The flexible tubular pipe (1) as claimed in any one of claims 1 to 5, **characterized in that** the yield stress of said reinforcing metal profile (7) is greater than 800 MPa.

7. The flexible tubular pipe (1) as claimed in any one of claims 1 to 6, **characterized in that** said reinforcing metal profile (7) comprises zones having a hardness of greater than 40 HRc.

8. A process for manufacturing a flexible tubular pipe (1) for transporting fluids in the offshore oil production field, said flexible tubular pipe (1) comprising at least one internal carcass (2) and a polymeric sealing sheath (3), said manufacturing process comprising at least the following steps:
- a crude metal profile of long length is provided;
- said crude metal profile is helically wound in order to form a reinforcing metal profile (7), said reinforcing metal profile (7) being a component of the internal carcass (2);
- a polymeric sealing sheath (3) is extruded around said internal carcass (2);
said manufacturing process being **characterized in that** said crude metal profile is made from a corrosion-resistant alloy of composition:
30 to 32% by weight of nickel (Ni),
26 to 28% by weight of chromium (Cr),
6 to 7% by weight of molybdenum (Mo),
0.10 to 0.3% by weight of nitrogen (N),
at most 0.015% by weight of carbon (C),
at most 2% by weight of manganese (Mn),
0.5 to 1.5% by weight of copper (Cu),
at most 0.5% by weight of impurities,
the remainder of the composition being constituted of iron (Fe).

9. The manufacturing process as claimed in claim 8, **characterized in that** said corrosion-resistant alloy is UNS N08031.

10. The manufacturing process as claimed in claim 8 or 9, **characterized in that** said crude metal profile is a wire of drawn or rolled form.

11. The manufacturing process as claimed in claim 8 or 9, **characterized in that** said crude metal profile is a strip.

12. The manufacturing process as claimed in claim 11, **characterized in that** said crude metal profile is transformed by profiling before being helically wound.

13. The manufacturing process as claimed in any one of claims 8, 9, 10 and 12, **characterized in that** said crude metal profile is interlocked during the helical winding step.

14. The manufacturing process as claimed in any one of claims 8 to 13, **characterized in that** the work-hardening applied to said crude metal profile in order to transform it to said reinforcing metal profile (7) is applied at ambient temperature.

15. The manufacturing process as claimed in claim 14, **characterized in that** the yield stress of said reinforcing metal profile (7) is greater than 800 MPa.

16. The manufacturing process as claimed in claim 15, **characterized in that** the yield stress of said crude metal profile is between 300 MPa and 400 MPa.

## Patentansprüche

1. Flexible Rohrleitung (1) für den Transport von Fluiden auf dem Gebiet der Offshore-Erdölförderung, wobei die flexible Rohrleitung (1) mindestens ein inneres Gerippe (2) und eine polymerische Dichtungshülle (3) aufweist, wobei das innere Gerippe (2) ein metallisches Versteifungsprofil (7) aufweist, das spiralförmig aufgewickelt ist, **dadurch gekennzeichnet, dass** das metallische Versteifungsprofil (7) aus einer korrosionsbeständigen Legierung hergestellt ist mit folgender Zusammensetzung:
30 bis 32 Masse-% Nickel (Ni),
26 bis 28 Masse-% Chrom (Cr),
6 bis 7 Masse-% Molybdän (Mo),
0,10 bis 0,3 Masse-% Stickstoff (N),
höchstens 0,015 Masse-% Kohlenstoff (C)
höchstens 2 Masse-% Mangan (Mn)
0,5 à 1,5 Masse-% Kupfer (Cu),
höchstens 0,5 Masse-% Verunreinigungen,
wobei der Rest der Zusammensetzung aus Eisen (Fe) besteht.

2. Flexible Rohrleitung (1) nach Anspruch 1, **dadurch gekennzeichnet, dass** die korrosionsbeständige Legierung UNS N08031 ist.

3. Flexible Rohrleitung (1) nach Anspruch 1 oder 2, **dadurch gekennzeichnet, dass** das metallische Versteifungsprofil (7) ein Draht mit gezogener oder gewalzter Form ist.

4. Flexible Rohrleitung (1) nach Anspruch 1 oder 2, **dadurch gekennzeichnet, dass** das metallische Versteifungsprofil (7) ein Profil-Stahlband ist.

5. Flexible Rohrleitung (1) nach einem der Ansprüche 1 bis 4, **dadurch gekennzeichnet, dass** das metallische Versteifungsprofil (7) geklammert ist.

6. Flexible Rohrleitung (1) nach einem der Ansprüche 1 bis 5, **dadurch gekennzeichnet, dass** die Elastizitätsgrenze des metallischen Versteifungsprofils (7) mehr als 800 MPa beträgt.

7. Flexible Rohrleitung (1) nach einem der Ansprüche 1 bis 6, **dadurch gekennzeichnet, dass** das metallische Versteifungsprofil (7) Zonen aufweist, die eine Härte von mehr als 40 HRc aufweisen.

8. Verfahren zur Herstellung einer flexiblen Rohrleitung (1) für den Transport von Fluiden auf dem Gebiet der Offshore-Erdölförderung, wobei die flexible Rohrleitung (1) mindestens ein inneres Gerippe (2) und eine polymerische Dichtungshülle (3) aufweist, wobei das Herstellungsverfahren mindestens die folgenden Schritte aufweist:
- es wird ein metallisches Rohprofil von großer Länge bereitgestellt;
- das metallische Rohprofil wird spiralförmig aufgewickelt, um ein metallisches Versteifungsprofil (7) zu bilden, wobei das metallische Versteifungsprofil (7) ein Bestandteil des inneren Gerippes (2) ist;
- eine polymerische Dichtungshülle (3) wird um das innere Gerippe (2) herum extrudiert;
wobei das Herstellungsverfahren **dadurch gekennzeichnet ist, dass** das metallische Rohprofil aus einer korrosionsbeständigen Legierung hergestellt ist mit folgender Zusammensetzung:
30 bis 32 Masse-% Nickel (Ni),
26 bis 28 Masse-% Chrom (Cr),
6 bis 7 Masse-% Molybdän (Mo),
0,10 bis 0,3 Masse-% Stickstoff (N),
höchstens 0,015 Masse-% Kohlenstoff (C)
höchstens 2 Masse-% Mangan (Mn)
0,5 à 1,5 Masse-% Kupfer (Cu),
höchstens 0,5 Masse-% Verunreinigungen,
wobei der Rest der Zusammensetzung aus Eisen (Fe) besteht.

9. Herstellungsverfahren nach Anspruch 8, **dadurch gekennzeichnet, dass** die korrosionsbeständige Legierung UNS N08031 ist.

10. Herstellungsverfahren nach Anspruch 8 oder 9, **dadurch gekennzeichnet, dass** das metallische Rohprofil ein Draht mit gezogener oder gewalzter Form ist.

11. Herstellungsverfahren nach Anspruch 8 oder 9, **dadurch gekennzeichnet, dass** das metallische Rohprofil ein Stahlband ist.

12. Herstellungsverfahren nach Anspruch 11, **dadurch gekennzeichnet, dass** das metallische Rohprofil durch Profilieren umgeformt wird, bevor es spiralförmig aufgewickelt wird.

13. Herstellungsverfahren nach einem der Ansprüche 8, 9, 10 und 12, **dadurch gekennzeichnet, dass** das metallische Rohprofil während des Schrittes der spiralförmigen Aufwicklung geklammert wird.

14. Herstellungsverfahren nach einem der Ansprüche 8 bis 13, **dadurch gekennzeichnet, dass** das Nachwalzen, das auf das metallische Rohprofil angewendet wird, um es in ein metallisches Versteifungsprofil (7) umzuformen, bei Umgebungstemperatur angewendet wird.

15. Herstellungsverfahren nach Anspruch 14, **dadurch gekennzeichnet, dass** die Elastizitätsgrenze des metallischen Versteifungsprofils (7) mehr als 800 MPa beträgt.

16. Herstellungsverfahren nach Anspruch 15, **dadurch gekennzeichnet, dass** die Elastizitätsgrenze des metallischen Rohprofils zwischen 300 MPa und 400 MPa beträgt.
